# EUROPÄISCHE PATENTSCHRIFT

(11) **EP 3 144 259 B1**
(45) Veröffentlichungstag und Bekanntmachung des Hinweises auf die Patenterteilung: **03.05.2023**
(21) Anmeldenummer: 16401066.2
(22) Anmeldetag: 15.09.2016
(51) Int. Cl.: B66B 1/30, B66B 11/00, E04F 17/00

(54) **AUFZUGSANLAGE IN EINEM SCHACHTGERÜST MIT EINER PHOTOVOLTAIK-STEUERUNG**
LIFT ASSEMBLY IN A SHAFT FRAME WITH A PHOTOVOLTAIC CONTROL
ASCENSEUR DANS UNE STRUCTURE DE CAGE COMPRENANT UNE COMMANDE PHOTOVOLTAÏQUE

(30) Priorität: 18.09.2015 DE 102015115844
(43) Veröffentlichungstag der Anmeldung: 22.03.2017
(73) Patentinhaber: Aufzugswerke Schmitt & Sohn GmbH & Co. KG, 90402 Nürnberg (DE)
(72) Erfinder: Kaldenhoff, Peter, 90491 Nürnberg (DE); Kipfstuhl, Michael, 91217 Hersbruck (DE); Schmidt, Frank, 90402 Nürnberg (DE)
(74) Vertreter: Cöster, Enno

(56) Entgegenhaltungen:
- EP-A1- 2 500 309
- WO-A1-2010/092231
- DE-A1-102008 004 334
- DE-U1- 20 302 588

## Beschreibung

### 1. Technisches Gebiet

Die vorliegende Erfindung betrifft eine Aufzugsanlage umfassend ein Schachtgerüst mit einer Photovoltaik-Steuerung gemäß dem Oberbegriff des unabhängigen Patentanspruchs 1.

### 2. Stand der Technik

In der Regel umfassen Fassadenaufzüge oder Panoramaaufzüge eine Aufzugsanlage mit einer Aufzugskabine in einem Schacht, der aus einem verkleideten Schachtgestell bzw. Schachtgerüst besteht, welches an der Außenwand eines Gebäudes befestigt ist. Das Schachtgerüst ist ganz oder teilweise verglast und die Aufzugskabine kann ebenfalls ganz oder teilweise verglast sein. Das mehreckige, in der Regel quaderförmige Schachtgerüst besteht üblicherweise aus Profilen aus Stahl oder Aluminium. Senkrechte Kastenprofile bilden die Eckpfosten, wobei mindestens zwei an einer Gebäudewand befestigt sind. Die Eckpfosten werden durch mehrere Quer- und /oder Diagonalstreben verbunden, um die Stabilität zu gewährleisten.

Der durch die Eckpfosten und Streben gebildete Rahmen des Schachtgerüstes wird beim so genannten Panoramaaufzug üblicherweise mit einer Verkleidung aus Sicherheitsglas oder anderweitig aus stabilem, aber undurchsichtigem Material versehen. Hierdurch soll sichergestellt werden, dass einerseits die Komponenten im Schachtgerüst gegen äußere Beeinträchtigungen und Beschädigungen wie zum Beispiel Regen, Hagel, Herunterfallen von Laub oder Geäst, usw. geschützt sind und andererseits Verletzungen von Personen durch Eingriff in die Fahrbahn der Aufzugskabine oder des Gegengewichts oder in andere bewegliche Teile ausgeschlossen sind. Beim Panoramaaufzug bleibt die Funktionalität des Aufzugs sowohl von außen und gegebenenfalls auch von innen transparent sichtbar. Die Aufzugskabine kann deshalb ebenfalls mit Sicherheitsglas ausgestattet sein. Die Kosten für die Sicherheitsgläser sind nicht unerheblich. Ferner erfordert die Außenmontage der Verkleidung am Schachtgerüst einen relativ hohen Montageaufwand, ohne einen weiteren funktionellen Nutzen außer dem Wind- und Wetterschutz aufzuweisen. Bei verglasten Schachtgerüsten besteht unter Umständen wie beispielsweise bei starker Sonneneinstrahlung oder bei niedrigen Außentemperaturen ein zusätzlicher erhöhter Bedarf an Klimatisierung für den Aufzugsschacht und für die Aufzugskomponenten samt Fahrkorb, insbesondere auch im Not-Betrieb bei Ausfall des Stromnetzes und auch im Fall von im Aufzug eingeschlossenen Personen.

Aus dem Stand der Technik ist bekannt, auf dem Dach eines Gebäudes mit einer Aufzugsanlage Solarmodule oder Photovoltaikpaneele anzubringen. In den Modulen oder Paneelen wandeln Solarzellen das eintreffende Sonnenlicht in elektrische Energie um. Die auf dem Dach des Gebäudes angeordneten Solarmodule besitzen für den eigentlichen Bau der Aufzugsanlage keine weitere Funktion. Zur baulich notwendigen Außenfassade des Schachtgerüsts kommt eine zusätzliche Montageeinrichtung wie Gerüst, Ständer, Halteeinrichtungen, etc. hinzu, worauf die Solarmodule befestigt werden. Es ist die Installation zusätzlicher Komponenten wie beispielsweise von Einspeisegeräten bereitzustellen. Der Betrieb der Solarmodule erfolgt unabhängig vom Zustand der Aufzugsanlage.

Zur Klimatisierung des Aufzugsschachts und der Aufzugskomponenten samt Fahrkorb auch im Not-Betrieb bei Ausfall des Stromnetzes und auch im Fall von im Aufzug eingeschlossenen Personen, insbesondere bei verstärkt auftretender Sonneneinstrahlung in den Aufzugsschacht, aber auch beispielsweise im Winter zur Beheizung einer Aufzugsanlage, ist zusätzlich Energie zur Belüftung und zum Betreiben von Klimaaggregaten bereitzustellen, wodurch die Effizienz der Aufzugsanlage sinkt.

Aus der DE 203 02 588 U1 ist ein Schachtgerüst mit wenigstens einem Photovoltaikwandler bekannt, mit welchem der hohe Montageaufwand der Außenfläche eines Schachtgerüstes in Synergie genutzt werden kann, um Zeit und Kosten einzusparen und wodurch eine gemeinsame Nutzung von Montagekomponenten weitgehend ermöglicht wird. DE 203 02 588 U1 offenbart den Oberbegriff des Anspruchs 1.

Die WO 2010 092 231 A1 beschreibt einen Aufzugsschacht mit einer photothermischen Wandlerzelle zur thermischen Absorption von Sonnenstrahlung.

Die DE 10 2008 004 334 A1 befasst sich mit ausstellbaren Fassaden kollektoren.

Ferner offenbart die EP 2 500 309.A1 ein Energieverwaltungssystem für eine solarbetriebene Aufzugsanlage.

### 3. Aufgabenstellung

Es ist deshalb Aufgabe der vorliegenden Erfindung eine Aufzugsanlage umfassend ein Schachtgerüst mit Photovoltaik-Steuerung bereitzustellen, mit welcher der hohe Montageaufwand der Außenfläche eines Schachtgerüstes in Synergie genutzt werden kann und zusätzliche Montageeinrichtungen und Komponenten weitgehend vermieden werden können, um Zeit und Kosten einzusparen sowie eine gemeinsame Nutzung von Komponenten weitgehend ermöglicht wird, mit welcher eine Unterstützung der Klimatisierung für Aufzugskomponenten zur Verfügung gestellt werden kann, mit welcher ein Standby- beziehungsweise Not-Betrieb auch bei Ausfall des Stromnetzes und auch im Fall von im Aufzug eingeschlossenen Personen und deren Evakuierung möglichst lange aufrecht erhaltbar ist und mit welcher insbesondere die Nachteile des Standes der Technik überwunden werden können.

Ferner ist es Aufgabe der vorliegenden Erfindung den Bau von Solaranlagen in der Aufzugstechnik ohne wesentliche Extrakosten zu realisieren, den Bau eines rückspeisefähigen Aufzugs zur Verfügung zu stellen, eine Vergütung für die rückgespeiste elektrische Energie zu erzielen sowie eine Nutzung von Solarenergie auch mit einer Aufzugsanlage an bestehenden Gebäuden nachzurüsten und auch für besondere Gebäude wie denkmalgeschützte Häuser bereitzustellen.

### 4. Zusammenfassung der Erfindung

Diese Aufgabe wird durch eine erfindungsgemäße Aufzugsanlage umfassend ein Schachtgerüst mit einer Photovoltaik-Steuerung mit den Merkmalen des Patentanspruches 1 gelöst. Bevorzugte Ausführungsformen finden sich in den abhängigen Ansprüchen.

Die erfindungsgemäße Aufzugsanlage umfassend ein Schachtgerüst mit Photovoltaik-Steuerung umfasst eine seitliche und/oder obere Schachtgerüstverkleidung mit zumindest teilweiser Verglasung für einen Aufzugsschacht, der an einem Gebäude anbringbar ist, zumindest einen Photovoltaik-Wandler, der eintreffende Strahlungsenergie in elektrische Energie umwandelt und wenigstens eine Einspeiseeinheit, welche die erzeugte elektrische Energie zur weiteren Verwendung bereitstellt.

Die erfindungsgemäße Aufzugsanlage mit Photovoltaik-Steuerung umfasst ferner einen Aufzugsschacht, eine Aufzugsschachtverkleidung, Aggregate, eine Steuerungseinheit und wenigstens eine Einspeiseeinheit, wobei die Steuerungseinheit die Aggregate mit Steuerungssignalen und elektrischer Energie, die die Einspeiseeinheit bereitstellt, versorgt. Die Steuerungseinheit kann die Aufzugssteuerungseinheit selbst oder eine zusätzliche gesonderte Steuerungseinheit umfassen.

Vorteilhaft können bei Einsatz von mehreren Photovoltaik-Wandlern, insbesondere bei unterschiedlicher horizontaler Ausrichtung der Photovoltaik-Wandler, mehrere den Photovoltaik-Wandlern jeweils zugeordnete Einspeiseeinheiten vorgesehen werden, welche entsprechend der richtungsabhängig unterschiedlich auftreffenden Strahlungsintensität jeweils getrennt steuerbar sind, um so eine optimierte Bereitstellung der erzeugten elektrischen Energie einzeln oder optional auch über eine gemeinsame Einspeiseeinheit zu gewährleisten.

Als Schachtinnenraum im Sinne dieser Erfindung wird der Hohlraum verstanden, der von der Gebäudewand und der Innenseite der Schachtgerüstverkleidung begrenzt wird, nicht jedoch die Schachtgerüstverkleidung selbst.

Es sind auch mehreckige mit größer gleich drei bis n Ecken bis hin zu runden Gerüstformen mit geraden oder gewölbten Verglasungen oder anderen Elementen der Schachtgerüstverkleidung und entsprechend gewölbten Quer- und /oder Diagonalstreben möglich.

Durch die erfindungsgemäße Ausgestaltung kann eine Aufzugsschachtverkleidung bereitgestellt werden, die über den Stand der Technik hinausgehende weitere funktionelle Nutzen bietet, wie beispielsweise die Bereitstellung der benötigten elektrischen Energie für eine Klimatisierung des Schachtinnenraums und für Aufzugskomponenten, ohne einen weiteren hohen Montageaufwand zu haben, da bereits vorhandene Einrichtungen und/oder Komponenten in zusätzlicher Weise verwendet werden können. Die erzeugte elektrische Energie kann vorteilhafter Weise für einen Stand-by-Betrieb und/oder für einen Notbetrieb einer Aufzugsanlage, insbesondere bei einem Ausfall des Stromnetzes, eingesetzt werden. Die erzeugte elektrische Energie bietet weiterhin den Vorteil, dass diese in ein Stromnetz eingespeist werden kann, wodurch eine Vergütung erzielbar ist. Die erfindungsgemäße Ausgestaltung der Schachtverkleidung der Aufzugsanlage kann an einer oder an mehreren Seiten sowie auf der Oberseite eines Schachtgerüstes realisiert werden.

Die erzeugte elektrische Energie kann mit und ohne Zwischenspeicherung zur Verfügung gestellt werden. Die erfindungsgemäße Ausgestaltung ist ohne wesentliche zusätzliche Kosten realisierbar. Ferner kann eine rückspeisefähige Aufzugsanlage bereitgestellt werden, welche zusätzliche Kosten im Laufe der Zeit amortisieren kann.

Die Steuerung des Flusses der elektrischen Energie wenigstens eines Photovoltaik-Wandlers und/oder von wenigstens einem Aktor zur Bewegung eines Photovoltaik-Wandlers und/oder eines Elements der Schachtverkleidung und/oder von wenigstens einer Beschattungseinrichtung erfolgt dabei vorteilhaft abhängig vom Zustand innerhalb und/oder außerhalb der Aufzugsanlage, insbesondere von der Temperatur und/oder der Luftfeuchte und/oder den Lichtverhältnissen im Schachtinnenraum und/oder von der Intensität der Sonneneinstrahlung und/oder den Witterungsverhältnissen, insbesondere der Temperatur und/oder der Windgeschwindigkeit und/oder Luftfeuchte und/oder der Oberflächenfeuchte außerhalb der Schachtgerüstverkleidung und/oder von der Temperatur an wenigstens einem Punkt der Schachtverkleidung. Die Erfassung der Temperatur, Luftfeuchte, Lichtstärke, Windstärke und/oder Feuchtigkeit erfolgt dabei vorteilhaft durch Sensoren, welche die jeweilige physikalische Zustandsgröße in ein elektrisches Signal mit entsprechendem analogem oder digitalem Wert umwandeln und als Istwert zur Steuerung oder zur Regelung der Aufzugsanlage mit erfindungsgemäßer Schachtgerüstverkleidung bereitstellen.

Im Notbetrieb einer Aufzugsanlage, insbesondere bei einem Ausfall des Stromnetzes werden vorteilhaft die Komponenten der Aufzugsanlage so gesteuert, dass beispielsweise der Energiebedarf für den Notruf und die Klimatisierung vorrangig bereitgestellt und der Energiebedarf von weiteren Komponenten herabgesetzt wird. Dies kann beispielsweise durch ein Herabsetzen der Antriebsgeschwindigkeit und/oder Optimierung der Fahrtrichtung bei Evakuierung und/oder durch Anpassung der Beleuchtungsintensität der Beleuchtungsmittel auf Notbeleuchtung und/oder Reduzierung der Geschwindigkeit bei der Öffnung von Türen erfolgen. Dadurch wird gewährleistet, dass die verfügbare von der Einspeiseeinheit bereitgestellte elektrische Energie möglichst lange zur Verfügung steht. Ferner ist vorteilhaft, dass weitere Hilfsstromquellen, die herkömmlich bereitgestellt werden müssen, nicht mehr erforderlich sind.

Die Einspeiseeinheit kann sowohl für eine Aufzugsanlage als auch für die Photovoltaik-Steuerung gemeinsam benutzt werden. Es wird damit insbesondere eine Rückspeisung der photovoltaisch erzeugten elektrischen Energie gemeinsam mit der im regenerativen Aufzugsbetrieb erzeugten elektrischen Energie ermöglicht.

Der zumindest eine Photovoltaik-Wandler kann eine Abmessung aufweisen, die einen Bruchteil oder ein Vielfaches eines Bruchteils der Schachtbreite, Schachttiefe, Schachthöhe, Haltestellenabständen, Schienenbügelabständen, Schachttürhöhen oder sonstigen geometrischen Kenngrößen einer Aufzugsanlage beträgt. Es sind auch gewölbte Photovoltaik-Wandler einsetzbar, deren Wölbungsbreite und deren Höhe entsprechende Abmessungen aufweisen.

Die wenigstens teilweise Verglasung der Schachtverkleidung kann eine Standardverglasung, insbesondere ein Verbund-Sicherheits-Glas (VSG), umfassen.

Vorteilhaft sind auf der Schachtverkleidung feststehende Photovoltaik-Wandler oder bewegliche Photovoltaik-Wandler aufbringbar oder anbringbar.

Es ist von Vorteil, dass die Schachtverglasung zumindest einen integrierten Photovoltaik-Wandler umfasst. Der zumindest eine integrierte Photovoltaik-Wandler kann in der Schachtverglasung eingearbeitet sein oder auf der Oberfläche der seitlichen Schachtverglasung aufgebracht oder angebracht sein. Hierdurch wird insbesondere eine effiziente und kostengünstige Ausgestaltung bereitgestellt.

Vorteilhaft ist der wenigstens eine Photovoltaik-Wandler auf einem transparenten oder nicht-transparenten Element der Schachtverkleidung beispielsweise durch Verklebung beziehungsweise Laminierung aufgebracht.

In einem bevorzugten Ausführungsbeispiel sind elektrisch oder pneumatisch oder hydraulisch gesteuerte Aktoren oder manuelle Antriebe zur Bewegung des zumindest einen beweglichen Photovoltaik-Wandlers oder eines Elements der Schachtverkleidung einsetzbar. Hierdurch kann insbesondere eine optimierte Lüftung und Klimatisierung einer Aufzugsanlage zur Verfügung gestellt werden sowie die Energieausbeute durch Nachführung bzw. durch Optimierung des Einstrahlwinkels gesteigert werden.

In einem weiteren bevorzugten Ausführungsbeispiel umfasst die Schachtverglasung zumindest einen semi-transparenten Photovoltaik-Wandler oder zumindest einen nicht-transparenten Photovoltaik-Wandler. Der zumindest eine nicht-transparente oder semi-transparente Photovoltaik-Wandler kann eine Rasterung mit transparenten und/oder semi-transparenten und/oder nicht-transparenten Verglasungsbereichen umfassen. Diese Ausgestaltung bietet zudem die Möglichkeit, ein elegantes und individuelles Design der Aufzugsschachtverkleidung bereitzustellen.

Der zumindest eine Photovoltaik-Wandler ist verschiedenfarbig und/oder gerastert ausbildbar. Hierdurch können Schriftzeichen, Bilder oder unterschiedliche Muster, wie Schachbrett, Raute oder dergleichen, dargestellt und als gestalterisches Mittel eingesetzt werden.

In einem weiteren bevorzugten Ausführungsbeispiel umfasst die Schachtverglasung zumindest einen Photovoltaik-Wandler mit unifazialer oder bifazialer Wandlercharakteristik. Damit ist im Fall der unifazialen Wandlercharakteristik die von außerhalb der Schachtverkleidung oder im Fall der bifazialen Wandlercharakteristik sowohl die von außerhalb als auch aus dem Schachtinnenraum auftreffende Strahlungsenergie in elektrische Energie umwandelbar, wodurch eine weitere Steigerung der Effizienz der Aufzugsanlage erzielbar ist.

Vorteilhafter Weise ist zusätzlich wenigstens ein weiterer Photovoltaik-Wandler am Gebäude anbringbar.

Zwischen der Wandlerfläche des zumindest einen Photovoltaik-Wandlers und dem Schachtinnenraum ist vorteilhaft eine Beschattungseinrichtung anordenbar. Vorteilhaft ist die Beschattungseinrichtung in der Schachtverglasung eingearbeitet oder auf der Oberfläche der Schachtverglasung aufbringbar oder anbringbar. Die Beschattungseinrichtung kann als Wärmeschutz eingesetzt werden.

Alternativ können auch andere mechanisch steuerbare Beschattungseinrichtungen, wie beispielsweise Jalousien, Rollladen oder dergleichen, vorgesehen werden.

Bei Anbringung des wenigstens einen Photovoltaik-Wandlers hinter einer Schachtverglasung im Schachtinnenraum oder bei Verwendung eines bifaziαlen Photovoltaik-Wandlers erfolgt zumindest im Bereich der Wandlerflächen des Photovoltaik-Wandlers vorteilhaft keine Beschattung.

Bevorzugter Weise sind Leitungen des zumindest einen Photovoltaik-Wandlers in Hohlprofilen eines Schachtgerüstes oder in vorhandenen Kabelschächten der Aufzugsanlage verlegbar ausgestaltet, wodurch weitere Synergie zu vorhandenen Komponenten nutzbar ist.

Vorteilhafter Weise kann die Leitung der elektrischen Energie über jeweils voneinander elektrisch isolierte Führungsschienen der Aufzugsanlage, wie beispielsweise die Fahrkorbschienen oder die Gegengewichtsschienen, erfolgen.

Bei nicht voneinander isolierten Führungsschienen kann die Schienenanlage als gemeinsamer Rückleiter genutzt werden.

Bevorzugter Weise ist der zumindest eine Photovoltaik-Wandler bei bestehenden Schachtgerüsten nachträglich außerhalb oder innerhalb der Schachtverkleidung anbringbar oder in der Schachtverkleidung integrierbar, beispielsweise indem eine bestehende Verglasung durch eine Verglasung mit integriertem Photovoltaik-Wandler ersetzt wird.

Eine bewegliche Ausgestaltung kann vorteilhaft zum Bilden von Öffnungen in der Schachtverkleidung, insbesondere der Schachtverglasung, dienen. Durch eine bedarfsgesteuerte Steuerung der gebildeten Öffnungen in der Schachtverkleidung wird eine verbesserte Lüftung und Klimatisierung sowie eine optimierte Energieausnutzung erreicht.

Vorteilhaft werden Öffnungen, welche durch die erfindungsgemäße Steuerung in der Schachtverkleidung entstehen können, mit einem Gitter versehen, welches einen Gitterabstand aufweist, der so gewählt ist, dass der Eingriff durch Personen oder das Eindringen von Kleintieren, wie beispielsweise von Vögeln oder Mäusen, verhindert wird. Vorzugsweise werden Öffnungen nur in einer vorgeschriebenen sicheren Höhe vorzugsweise über 2,30 m über einer begehbaren Fläche angebracht. Ferner kann der zumindest eine bewegliche Photovoltaik-Wandler entsprechend dem Einfallswinkel der Sonnenstrahlung nachgeführt werden, wodurch eine optimierte Energieausnutzung unterstützt wird. Dabei ist vorteilhaft der Effekt ausnutzbar, dass bei hoch stehender Sonne einerseits der wenigstens eine Photovoltaik-Wandler in Richtung Sonneneinstrahlung ausstellbar ist und dadurch eine optimale Energiewandlung erreichbar ist und andererseits über die entstehende Öffnung in der Schachtverglasung die bei hoch stehender Sonne ebenfalls intensivere Wärmeeinstrahlung durch Luftaustausch, beispielsweise durch einen ebenfalls mit elektrischer Energie aus der Photovoltaik-Steuerung gespeiste Lüfter, unterstützt aus dem Aufzugsschacht, abführbar ist.

In einem bevorzugten Ausführungsbeispiel ist der zumindest eine Photovoltaik-Wandler senkrecht, das heißt im Wesentlichen parallel zur Lotachse oder um bis zu 70 Grad, vorzugsweise um bis zu 45 Grad gegenüber der Lotachse geneigt anbringbar. Im Fall der senkrechten Anordnung der Photovoltaik-Wandler werden diese vor Beeinträchtigungen wie Hagel, herabfallenden Ästen oder dergleichen weitgehend geschützt.

Die Steuerungseinheit steuert die Aktoren in Abhängigkeit der eintreffenden Strahlung an. Als Sensor zur Erfassung der Strahlungsintensität kann auch der zumindest eine Photovoltaik-Wandler oder ein weiterer Photovoltaik-Wandler verwendet werden. Dabei wird das abgegebene elektrische Potential des Wandlers als Istwert der Intensität der eintreffenden Sonnenstrahlung interpretiert.

Die Steuerung der Aktoren erfolgt in Abhängigkeit vom physikalischen Zustand innerhalb und/oder außerhalb der Aufzugsanlage von der Temperatur und/oder der Luftfeuchte und/oder den Lichtverhältnissen im Schachtinnenraum und/oder von der Intensität der Strahlungsenergie und/oder den Witterungsverhältnissen, der Temperatur und/oder der Windgeschwindigkeit und/oder Luftfeuchte und/oder der Oberflächenfeuchte außerhalb der Schachtgerüstverkleidung und/oder von der Temperatur an wenigstens einem Punkt der Schachtverkleidung.

Die Steuerungseinheit steuert die Aktoren zum Erzeugen von definierten Öffnungen zur Belüftung des Aufzugsschachts und zum Schließen in Abhängigkeit der Intensität der eintreffenden Strahlung an. Als Steuerungseinheit kann die Steuerungseinheit der Aufzugsanlage oder eine separate Steuerungseinheit verwendet werden.

Bevorzugter Weise sind zumindest zwei Photovoltaik-Wandler parallel oder in Reihe schaltbar. Es versteht sich, dass auch mehrere Photovoltaik-Wandler eingesetzt werden können, die teilweise parallel und/oder in Reihe schaltbar sind.

Die wenigstens eine Einspeiseeinheit kann alternativ durch eine Einspeiseeinheit der Aufzugsanlage oder durch eine separate Einspeiseeinheit ausgeführt sein, wodurch vorteilhaft eine der beiden Komponenten eingespart werden kann. Die wenigstens eine Einspeiseeinheit kann im Schachtkopf, in der Schachtgrube, in einem Maschinenraum, in einem separaten Schaltschrank oder in einem Haustechnikraum angeordnet werden.

Die wenigstens eine Einspeiseeinheit kann elektrische Energie entweder aus einem Stromnetz oder von dem zumindest einen Photovoltaik-Wandler oder von einer Energiespeichereinheit beziehen und/oder an das Stromnetz und/oder an die Energiespeichereinheit und/oder an die Steuerungseinheit weiterleiten. Die wenigstens eine Einspeiseeinheit kann eine vorhandene Einspeiseeinheit der Aufzugsanlage oder eine zusätzliche gesonderte Einspeiseeinheit umfassen. Eine vorhandene Einspeiseeinheit der Aufzugsanlage stellt beispielsweise die bei generatorischen Fahrten der Aufzugsanlage verfügbare Lageenergie oder auch kinetische Energie bereit, welche von der Aufzugsanlage elektrisch generiert wird.

Ein generatorischer Betrieb liegt beispielsweise vor, wenn a) der Fahrkorb samt evtl. vorhandener Beladung leichter ist als das Gegengewicht und der Aufzug aufwärts fährt, oder b) der Fahrkorb samt evtl. vorhandener Beladung schwerer ist als das Gegengewicht und der Aufzug abwärts fährt, und/oder c) unter Umständen beim Bremsen, wenn kinetische Energie abgebaut werden muss. Typischerweise beträgt die Masse des Gegengewichts zwischen 40% und 60% der Nennlast des Aufzugs.

Bevorzugter Weise umfasst die Aufzugsanlage eine Energiespeichereinheit.

Die Energiespeichereinheit kann zumindest einen Akku, Kondensator, Schwungmassespeicher, Federspeicher, Druckspeicher und/oder sonstige chemische, mechanische, thermische, hydraulische oder elektrische Speicherformen umfassen. Die Energiespeichereinheit kann eine zusätzliche gesonderte Energiespeichereinheit umfassen.

Die erzeugte elektrische Energie kann mit und ohne Zwischenspeicherung genutzt werden.

Vorzugsweise können Anschlussleitungen bei Nutzung von Zwischenspeichern für einen maximalen Energiebedarf oder definiert minimierten Energiebedarf ausgelegt sein, um so die Anschlusskosten gering zu halten.

### 5. Kurze Beschreibung der Zeichnungen

Im Folgenden werden anhand von Figuren Ausführungsbeispiele der Erfindung beschrieben. Diese Figuren zeigen:
Fig. 1 eine schematische Ansicht einer Anordnung eines Aufzugs mit einem Schachtgerüst;
Fig. 2 eine schematische Ansicht einer Prinzip-Anordnung der Mittel einer Aufzugsanlage in einem Schachtgerüst mit Photovoltaik-Steuerung;
Fig. 3a Glasaufbaubeispiel für Verbund-Sicherheits-Glas (VSG)
Fig. 3b bis Fig. 3d verschiedene Schichtaufbauten für eine Verglasung mit integriertem Photovoltaik-Wandler 16 gemäß dem Ausführungsbeispiel 11b.
Fig. 4a bis 4c schematische Schnittansichten von optionalen zusätzlichen Anordnungen einer bezüglich Transparenz der Verglasung 1 elektrisch steuerbaren Beschattungseinrichtung 15;
Fig. 5a bis Fig. 5c eine herkömmliche VSG-Anordnung 17a, 18, 17b zur Schachtverglasung 1 gemäß dem Ausführungsbeispiel 11a mit zusätzlich von außen montiertem Photovoltaik-Wandler 12;
Fig. 6a bis Fig. 6c beispielhafte VSG-Anordnungen aus den vorgenannten Beispielen, wobei diese prinzipiell auf alle Beispiele anwendbar sind; und
Fig. 7 ein Beispiel für eine flächenmäßige gerasterte Anordnung der Photovoltaik-Wandler 12, 14, 16 auf oder in der Schachtverglasung 1 oder alternativ auf einem nicht-transparenten Element der Schachtverkleidung.

Gemeinsame Bezugszeichen werden in den Figuren durchgehend verwendet, um ähnliche Merkmale anzuzeigen.

### 6. Detaillierte Beschreibung

Ausführungsbeispiele der vorliegenden Erfindung sind nachfolgend nur beispielhaft beschrieben. Diese Beispiele stellen die besten Wege dar, die Erfindung in der Praxis umzusetzen, welche der Anmelderin derzeit bekannt sind, obwohl dies natürlich nicht die einzigen Wege sind, auf welchen dies erreicht werden könnte. Die Beschreibung legt die Funktionen des Beispiels und die Abfolge der Schritte für das Gestalten und den Betrieb des Beispiels dar. Jedoch können dieselben oder äquivalente Funktionen und Abfolgen von anderen Beispielen erzielt werden.

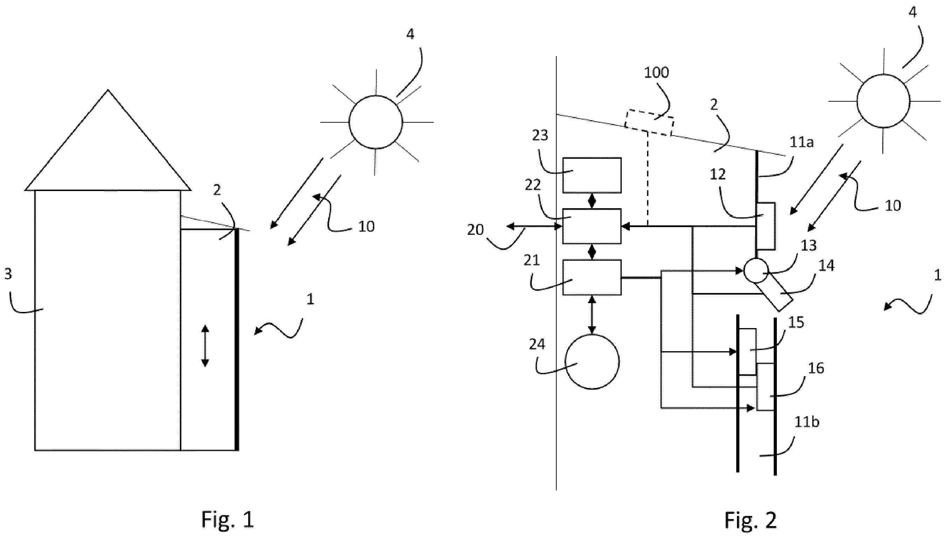

Fig. 1 zeigt eine schematische Ansicht einer Anordnung eines Aufzugs mit einem Schachtgerüst.

In Fig. 1 ist ein Aufzugsschacht 2 dargestellt, welcher außen an einem Gebäude 3 angebracht ist und von dem wenigstens eine Seite wenigstens teilweise eine Schachtverglasung 1 umfasst. Mit dem Bezugszeichen 4 ist die Sonne angedeutet, die auf die Schachtverglasung 1 scheint. Die Sonne 4 strahlt Strahlungsenergie 10 ab. Innerhalb der Schachtverglasung 1 kann eine Aufzugsanlage (nicht dargestellt) ausgebildet sein.

Fig. 2 zeigt eine prinzipielle Darstellung einer Aufzugsanlage in einem Schachtgerüst mit Photovoltaik-Steuerung und einer Anordnung der Mittel der Photovoltaik-Steuerung im bzw. am Aufzugsschacht 2.

Die Photovoltaik-Wandler 12, 14, 16, 100 wandeln von der Sonne 4 eintreffende Strahlungsenergie 10 in elektrische Energie um. Die so erzeugte elektrische Energie wird einer Einspeiseeinheit 22 zur weiteren Verarbeitung bereitgestellt.

Die Schachtverglasung 1 wird dabei beispielhaft in den alternativen Ausführungsbeispielen gemäß Bezugszeichen 11a oder 11b dargestellt.

Im Ausführungsbeispiel 11a umfasst die Verglasung eine StandardVerglasung wie beispielsweise handelsübliches Verbund-Sicherheits-Glas (VSG) oder alternativ ein nicht-transparentes Element der Schachtverkleidung, auf welchem feststehende Photovoltaik-Wandler 12 oder bewegliche Photovoltaik-Wandler 14 angebracht sind. Die Bewegung wenigstens eines der beweglichen Photovoltaik-Wandler 14 kann dabei über gesteuerte Aktoren oder über manuelle Antriebe 13 erfolgen. Eine steuerbare Beschattungseinrichtung 15, kann im Bereich der VSG-Verkleidung dabei optional zusätzlich im Verbundglas eingearbeitet oder auf der Oberfläche der Glaselemente aufgebracht oder angebracht sein.

Das alternative Ausführungsbeispiel 11b zeigt eine Schachtverglasung 1 mit integriertem Photovoltaik-Wandler 16 und/oder steuerbarer Beschattungseinrichtung 15. Diese Mittel, d.h. der Photovoltaik-Wandler 16 und/oder die steuerbare Beschattungseinrichtung 15, können dabei im Verbundglas eingearbeitet oder auf der Oberfläche der Glaselemente aufgebracht oder angebracht sein. Die Bewegung wenigstens eines der Glaselemente mit integriertem Photovoltaik-Wandler 16 und/oder steuerbarer Beschattungseinrichtung 15 kann dabei ebenfalls über gesteuerte Aktoren oder über manuelle Antriebe 13 erfolgen.

Die Ausführungsbeispiele 11a und 11b können semitransparente und/ oder nicht-transparente Photovoltaik-Wandler jeweils mit unifazialer oder bifazialer Wandler-Charakteristik umfassen. Bei unifazialer Wandler-Charakteristik wandelt der Photovoltaik-Wandler nur Strahlungsenergieanteile, welche aus einer Vorzugsrichtung, insbesondere die auf der Vorderseite auftreffen, in elektrische Energie um. Bei bifazialer Wandler-Charakteristik werden Strahlungsenergieanteile, welche auf der Vorderseite und auf der Rückseite auftreffen, in elektrische Energie umgewandelt.

Vorteilhaft ist insbesondere bei nicht-transparenten oder bei semi-transparenten Photovoltaik-Wandlern eine Rasterung zum Zwecke der Kontrastbildung mit transparenteren Verglasungsbereichen vorzusehen.

Vorteilhaft ist insbesondere bei semi-transparenten Photovoltaik-Wandlern eine Rasterung abwechselnd mit transparenten und/oder nicht-transparenten Verglasungsbereichen vorzusehen.

Vorteilhaft ist insbesondere bei nicht-transparenten Photovoltaik-Wandlern eine Rasterung abwechselnd mit transparenten und/oder semi-transparenten Verglasungsbereichen vorzusehen.

Die Rasterung erfolgt dabei vorteilhaft in einem Abstand, der eine ausreichende Lichtzufuhr in den Schachtinnenraum ermöglicht. Dabei können auch vorteilhaft Gestaltungselemente zur Bildung von Mustern, Schriftzeichen oder Bildern, beispielswiese zu Werbezwecken, zum Einsatz gebracht werden. Eine Rasterung ermöglicht damit auch bei einem nicht-transparenten oder bei semi-transparenten Photovoltaik-Wandler 12, 14, 16 die erforderliche Transparenz der Verglasung 1.

Photovoltaik-Wandler 12, 14, 16 für Verglasungen der Ausführungsbeispiele 11a oder 11b können beim Neubau und ebenso nachträglich an bestehende Schachtgerüste oder durch Ersatz bestehender Schachtverkleidung angebracht werden, beziehungsweise die vorgesehene Verglasung ergänzen oder ersetzen. Die Photovoltaik-Wandler 12, 14, 16 können dabei senkrecht oder um im Wesentlichen von bis zu 70 Grad, vorzugsweise von bis zu 45 Grad, bezüglich der Lotachse geneigt angebracht werden.

Die Anbringung kann in der horizontalen und/oder vertikalen Neigung statisch fixiert und/oder manuell oder über Aktoren bewegbar ausgeführt sein.

Vorteilhaft folgt die Neigung dabei jahreszeit- und/oder tageszeitabhängig nach der maximalen Intensität der auf dem Photovoltaik-Wandler 14 eintreffenden Sonnenstrahlung 10.

Es ist von Vorteil, dass durch Bewegung von Elementen der Schachtverkleidung mit und ohne Photovoltaik-Wandlern die Möglichkeit der Belüftung des Aufzugsschachts durch steuerbare Öffnungen und damit die Optimierung der Energieausnutzung sowohl für die Steuerung und die Versorgung des Aufzugsbetriebs als auch bei der Klimatisierung und/oder Belüftung des Aufzugsschachts 2 gegeben ist.

Obwohl Fig. 2 nur eine einseitige Schachtverglasung darstellt, ist eine Schachtverglasung entsprechend den Ausführungsbeispielen 11a und 11b auch an jeder anderen Seite sowie an mehreren Seiten besonders vorteilhaft möglich.

Ferner kommt eine Erweiterung der Photovoltaik-Steuerung durch einen Photovoltaik-Wandler 100 auf dem Dach des Schachtgerüsts in Betracht. Es kommt ferner auch der Anschluss weiterer Photovoltaik-Wandler (in Fig. 2 nicht dargestellt) beispielsweise auf dem Dach des Gebäudes 3 oder am Gebäude 3 in Betracht.

Eine Aufzugsanlage kann Aggregate 24 umfassen. Die Aggregate 24 der Aufzugsanlage werden über eine Steuerungseinheit 21 mit den erforderlichen Steuersignalen und mit elektrischer Energie versorgt, welche die wenigstens eine Einspeiseeinheit 22 bereitstellt.

Die wenigstens eine Einspeiseeinheit 22 bezieht die elektrische Energie entweder aus einem Stromnetz 20, von den Photovoltaik-Wandlern 12, 14, 16, 100, gegebenenfalls von weiteren externen Photovoltaik-Wandlern, oder aus einer Energiespeichereinheit 23. Die Einspeiseeinheit 22 regelt dabei den Energiefluss, beispielsweise ob elektrische Energie aus dem Stromnetz 20 benötigt wird, ob elektrische Energie ins Stromnetz 20 rückgespeist werden kann, ob elektrische Energie aus den Photovoltaik-Wandlern 12, 14, 16, 100 in der Energiespeichereinheit 23 gespeichert werden soll, ob elektrische Energie zur Versorgung der elektrischen Aggregate 24 sowie der Steuerungseinheit 21 der Aufzugsanlage aus dem Stromnetz 20 entnommen werden und/oder ob elektrische Energie aus der Energiespeichereinheit 23 entnommen und/oder ob elektrische Energie aus den Photovoltaik-Wandlern 12, 14, 16, 100 entnommen werden kann.

Die Steuerungseinheit 21 kann neben der Betriebs-, Standby- und der Stromnetzausfall-Steuerung der Anlage auch die Steuerung von Aktoren 13 der Photovoltaik-Wandler oder von beweglichen Teilen der Schachtverglasung 1, sowie von gegebenenfalls vorhandenen steuerbaren Beschattungseinrichtungen 15 und/oder steuerbaren Photovoltaik-Wandlern 16, 14 übernehmen. Alternativ kann für die Steuerung der Aktoren 13 der Photovoltaik-Wandler oder von beweglichen Teilen der Schachtverglasung 1, sowie von gegebenenfalls vorhandenen steuerbaren Beschattungseinrichtungen 15 und/oder steuerbaren Photovoltaik-Wandlern 16, 14 eine separate Steuerungseinheit 21' (nicht dargestellt) vorgesehen werden.

Die Aggregate 24 der Auszugsanlage umfassen beispielsweise den Antrieb des Aufzugs und dessen Komponenten wie beispielsweise die Antriebe für Türen, die Beleuchtung, die Steuerung, den Notruf und/oder der Lüfter und/oder der Klimaaggregate zur Belüftung beziehungsweise Klimatisierung des Aufzugsschachts 2.

Die Energiespeichereinheit 23 kann Akkumulatoren und/oder Kondensatoren und/oder Schwungmassenspeicher und/oder Federspeicher und/oder Druckluftspeicher und/oder sonstige chemische, mechanische, thermische, hydraulische oder elektrische Speichermittel umfassen.

Die Einspeiseeinheit 22 und/oder die Steuerungseinheit 21 und/oder die Energiespeichereinheit 23 können vorteilhaft je nach Platzverhältnissen im Schachtkopf, in der Schachtgrube, im Maschinenraum oder in einem separaten Schaltschrank oder in einem Haustechnikraum des Gebäudes 3 untergebracht sein.

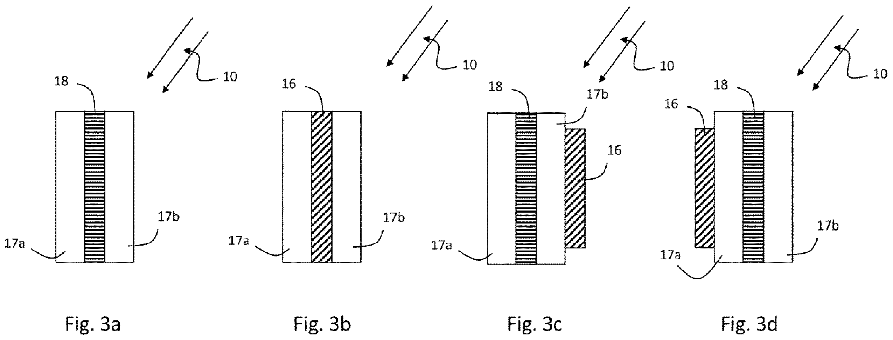

In Fig. 3a ist beispielhaft ein Aufbau von Verbund-Sicherheits-Glas (VSG) dargestellt. Dabei ist zwischen wenigstens zwei transparenten Glasschichten 17a und 17b eine in der Regel transparente bis teiltransparente Folie 18 durch Laminierung eingebunden, welche die Glasschichten einerseits miteinander verbindet, andererseits verhindert, dass sich beim Bruch einer oder mehrerer Glasscheiben Glasscherben ablösen.

Fig. 3b bis Fig. 3d zeigen verschiedene Schichtaufbauten für eine Verglasung mit integriertem Photovoltaik-Wandler 16 gemäß dem Ausführungsbeispiel 11b.

Fig. 3b zeigt einen VSG-Aufbau gemäß Beispiel aus Fig. 3a, wobei die transparente bis teiltransparente Folie 18 durch einen Photovoltaik-Wandler 16 ersetzt wurde.

Es ist auch möglich, den Photovoltaik-Wandler 16 zusätzlich zur Folie 18 anzubringen. Die Anschlüsse (nicht dargestellt) zur Entnahme elektrischer Energie und gegebenenfalls zur elektrischen Steuerung des Photovoltaik-Wandlers 16 werden an geeigneten Positionen durch die transparente Glasschicht 17a ins Innere des Aufzugsschachts 2 geführt und mit der Einspeiseeinheit 22 und gegebenenfalls mit der Steuerungseinheit 21 verbunden.

Fig. 3c zeigt einen VSG-Aufbau gemäß Beispiel aus Fig. 3a, wobei der Photovoltaik-Wandler 16 von außen auf die Oberfläche der transparenten Glasschicht 17b aufgebracht ist. Die Anschlüsse (nicht dargestellt) zur Entnahme elektrischer Energie und gegebenenfalls zur elektrischen Steuerung des Photovoltaik-Wandlers 16 werden an geeigneten Positionen durch die transparente Glasschicht 17b, 18, 17a ins Innere des Aufzugsschachts 2 geführt und mit der Einspeiseeinheit 22 und gegebenenfalls mit der Steuerungseinheit 21 verbunden.

Fig. 3d zeigt einen VSG-Aufbau gemäß Beispiel aus Fig. 3a, wobei der Photovoltaik-Wandler 16 von innen auf die Oberfläche der Glasschicht 17a aufgebracht ist. Die Anschlüsse (nicht dargestellt) zur Entnahme elektrischer Energie und gegebenenfalls zur elektrischen Steuerung des Photovoltaik-Wandlers 16 werden mit der Einspeiseeinheit 22 und gegebenenfalls mit der Steuerungseinheit 21 verbunden.

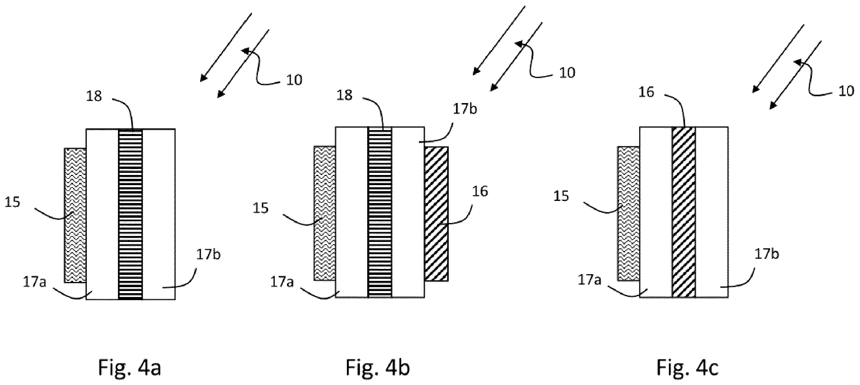

Fig. 4a bis 4c zeigen schematische Schnittansichten von optionalen zusätzlichen Anordnungen einer bezüglich Transparenz der Verglasung 1 elektrisch steuerbaren Beschattungseinrichtung 15.

Als bezüglich Transparenz elektrisch steuerbare Schicht 15 kommt beispielsweise elektrochromes Glas, elektrochrome Glasbeschichtung oder elektrochrome Folie in Betracht.

Alternativ können auch zwischen der von der Sonnenstrahlung 10 beaufschlagten Fläche des Photovoltaik-Wandlers 16 und dem Innenraum des Aufzugsschachts beispielsweise auf der Schachtinnenseite der Verglasung oder auf der Außenseite der Verglasung auch andere, beispielsweise mechanisch steuerbare Beschattungseinrichtungen, wie beispielsweise Jalousien, Rollladen oder dergleichen, vorgesehen werden.

In Fig. 4a ist ein VSG-Aufbau gemäß dem Beispiel aus Fig. 3a gezeigt, wobei eine bezüglich Transparenz elektrisch steuerbare Schicht 15 von innen auf die Oberfläche der Glasschicht 17a aufgebracht ist. Die Anschlüsse (nicht dargestellt) zur elektrischen Steuerung der elektrisch steuerbaren Beschattungseinrichtung 15, insbesondere eine elektrisch steuerbare Schicht, werden mit der Steuerungseinheit 21 verbunden.

Fig. 4b zeigt einen VSG-Aufbau gemäß Beispiel aus Fig. 4a, mit einer bezüglich Transparenz elektrisch steuerbaren Schicht 15, welche von innen auf die Oberfläche der Glasschicht 17a aufgebracht ist, wobei zusätzlich ein Photovoltaik-Wandler 16 von außen auf die Oberfläche der Glasschicht 17b aufgebracht ist. Die Anschlüsse (nicht dargestellt) zur Entnahme elektrischer Energie und gegebenenfalls zur elektrischen Steuerung des Photovoltaik-Wandlers 16 sowie zur elektrischen Steuerung der elektrisch steuerbaren Schicht 15 werden an geeigneten Positionen ins Innere des Schachts 2 geführt und mit der Steuerungseinheit 21 beziehungsweise mit der Einspeiseeinheit 22 verbunden

Fig. 4c zeigt einen VSG-Aufbau gemäß Beispiel aus Fig. 4a, mit einer bezüglich Transparenz elektrisch steuerbaren Beschattungseinrichtung 15, insbesondere elektrisch steuerbaren Schicht, welche von innen auf die Oberfläche der Glasschicht 17a aufgebracht ist, wobei ein Photovoltaik-Wandler 16 die Folie 18 der VSG-Anordnung ersetzt oder ergänzt. Die Anschlüsse (nicht dargestellt) zur Entnahme elektrischer Energie und gegebenenfalls zur elektrischen Steuerung des Photovoltaik-Wandlers 16 sowie zur elektrischen Steuerung der elektrisch steuerbaren Beschattungseinrichtung 15, insbesondere der elektrisch steuerbaren Schicht, werden an geeigneten Positionen ins Innere des Aufzugschachts 2 geführt und mit der Steuerungseinheit 21 beziehungsweise mit der Einspeiseeinheit 22 verbunden

In den Beispielen aus Fig. 4b und Fig. 4c gezeigte Reihenfolge der Schichtanordnungen von außen nach innen ist insbesondere dann von Vorteil, wenn die Beschattungseinrichtung 15, insbesondere eine elektrisch steuerbare Schicht, bezüglich des Photovoltaik-Wandlers 16 zwischen der von der Sonnenstrahlung 10 beschienenen Fläche des Photovoltaik-Wandlers 16 und dem Schachtinnenraum 2 angeordnet ist, weil die Beschattungseinrichtung 15 das Eindringen von Sonnenstrahlung in den Schachtinnenraum 2 mindert und so für den Schachtinnenraum 2 wirksam ist, jedoch nicht die Bestrahlung des Photovoltaik-Wandlers 16 durch Sonnenstrahlung 10 beeinträchtigt. Dadurch ist eine Erhöhung der Effizienz der Klimatisierung möglich, weil einerseits die Sonneneinstrahlung in den Aufzugsschacht 2 reduziert wird und andererseits insbesondere bei intensiver Sonneneinstrahlung die vom Photovoltaik-Wandler 16 gelieferte elektrische Energie vorteilhaft zur Speisung des Kühlaggregats und/oder der Lüftung und/oder bei kühlen Außentemperaturen zur Beheizung des Schachtinnenraums herangezogen werden kann.

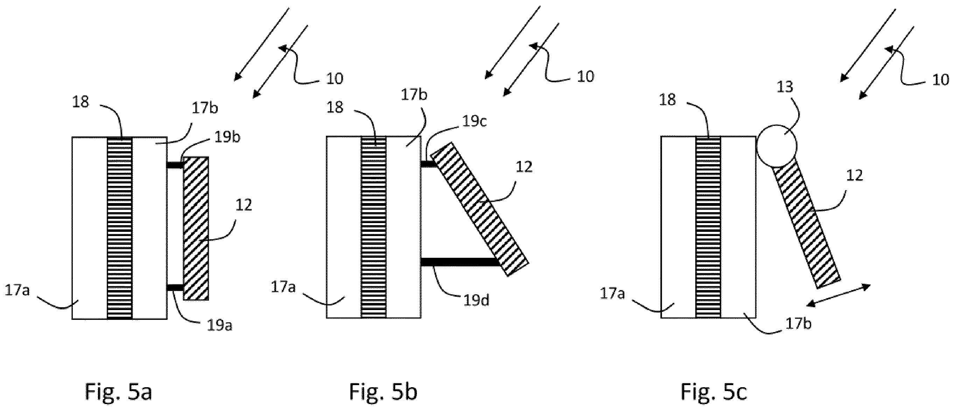

Fig. 5a bis Fig. 5c zeigen eine herkömmliche VSG-Anordnung 17a, 18, 17b zur Schachtverglasung 1 gemäß dem Ausführungsbeispiel 11a mit zusätzlich von außen montiertem Photovoltaik-Wandler 12.

Die Anschlüsse (nicht dargestellt) zur Entnahme elektrischer Energie vom Photovoltaik-Wandler 12 und gegebenenfalls zur elektrischen Steuerung des Photovoltaik-Wandlers 12 werden jeweils an geeigneten Positionen ins Innere des Aufzugsschachts 2 geführt und mit der Einspeiseeinheit 22 und gegebenenfalls mit der Steuerungseinheit 21 verbunden.

Der Fachmann erkennt, dass in diesen Anordnungen auch die Beschattungseinrichtung aus den Beispielen der Fig. 4a bis Fig. 4c zusätzlich auf der Innenseite, der Außenseite und/oder innerhalb der VSG-Verglasung vorteilhaft angebracht werden kann.

Fig. 5a zeigt beispielhaft die senkrechte Anbringung eines Photovoltaik-Wandlers 12 durch Montagemittel 19a, 19b.

Fig. 5b zeigt beispielhaft eine geneigte Anbringung eines Photovoltaik-Wandlers 12 durch Montagemittel 19c, 19d.

Fig. 5b zeigt beispielhaft eine über einen Antrieb 13 neigbare Anbringung eines Photovoltaik-Wandlers 12. Der Antrieb 13 kann als ein elektrisch, pneumatisch oder hydraulisch bewegbarer Aktor oder als eine manuell bedienbare Vorrichtung ausgeführt sein.

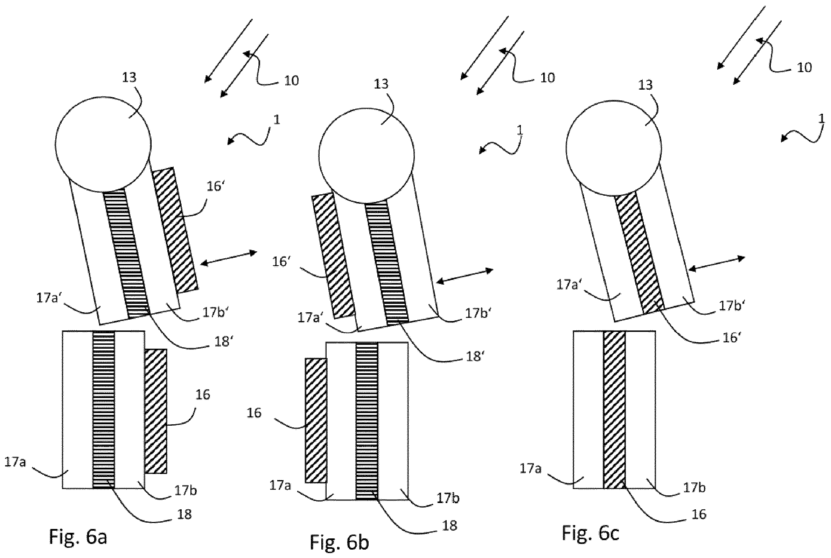

Fig. 6a bis Fig. 6c zeigen beispielhaft VSG-Anordnungen aus den vorgenannten Beispielen, wobei diese prinzipiell auf alle Beispiele anwendbar sind.

Die Schachtverglasung 1 ist über einen Antrieb 13 teilweise neigbar ausgeführt, wodurch in der Schachtverkleidung steuerbare, d.h. öffenbare und schließbare Durchlässe bereitgestellt werden. Der Fachmann erkennt, dass diese Anordnung auch auf die Beispiele in den Fig. 5a bis Fig. 5c und auf andere Elemente der Schachtverkleidung anwendbar ist. Der Antrieb 13 kann als ein elektrisch, pneumatisch oder hydraulisch steuerbarer Aktor oder als eine manuell bedienbare Vorrichtung ausgeführt sein.

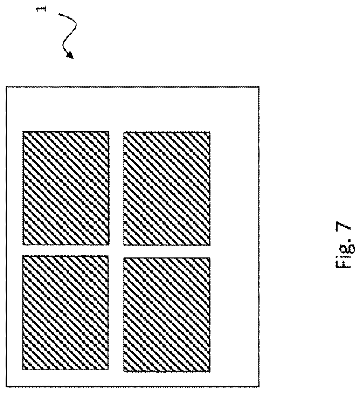

Fig. 7 zeigt ein Beispiel für eine flächenmäßig gerasterte Anordnung der Photovoltaik-Wandler 12, 14, 16 und 100 auf der Schachtverglasung 1. Man versteht, dass die obige Beschreibung bevorzugter Ausführungsformen nur beispielhaft ist und dass verschiedene Modifikationen im Schutzumfang der beigefügten Ansprüche von Fachleuten auf dem Gebiet der Technik ausgeführt werden können. Obwohl oben verschiedene Ausführungsformen mit einem gewissen Grad an Genauigkeit beschrieben wurden oder mit Bezug auf eine oder mehrere einzelne Ausführungsbeispiele, könnten Fachleute auf dem Gebiet der Technik zahlreiche Änderungen an den offenbarten Ausführungsbeispielen vornehmen, ohne dabei vom Schutzbereich der beigefügten Ansprüche abzuweichen.

### Liste der verwendeten Bezugszeichen:

- 1: Schachtverglasung
- 2: Schachtinnenraum
- 3: Gebäude
- 4: Sonne
- 10: Strahlungsenergie
- 11a: Schachtverglasung
- 11b: Schachtverglasung
- 12: Photovoltaik-Wandler
- 13: gesteuerter Aktor oder manueller Antrieb
- 14: Photovoltaik-Wandler
- 15: Beschattungseinrichtung
- 16, 16': Photovoltaik-Wandler
- 17a: transparente Glasschicht
- 17b: transparente Glasschicht
- 18: transparente bis teiltransparente Folie
- 19a: Montagemittel
- 19b: Montagemittel
- 19c: Montagemittel
- 19d: Montagemittel
- 20: Stromnetz
- 21: Steuerungseinheit
- 22: Einspeiseeinheit
- 23: Energiespeichereinheit
- 24: Aggregate
- 100: Photovoltaik-Wandler
- VSG: Verbund-Sicherheits-Glas

## Patentansprüche

1. Aufzugsanlage umfassend ein Schachtgerüst mit einer Photovoltaik-Steuerung umfassend eine Schachtverglasung (1, 11a, 11b) für einen Aufzugsschacht, der an einem Gebäude (3) anbringbar ist, zumindest einen Photovoltaik-Wandler (12, 14, 16, 16', 100), der eintreffende Strahlungsenergie (10) in elektrische Energie umwandelt, die Aufzugsanlage umfassend Aggregate (24), eine Steuerungseinheit (21) und eine Einspeiseeinheit (22), welche die erzeugte elektrische Energie zur weiteren Verarbeitung bereitstellt, wobei die Steuerungseinheit (21) die Aggregate (24) mit Steuerungssignalen und elektrischer Energie, die die Einspeiseeinheit (22) bereitstellt, versorgt, **dadurch gekennzeichnet, dass** eine Steuerungseinheit (21) mit Sensoren vorgesehen ist, die zumindest einen Teil der Photovoltaikwandler (12, 14, 16, 16', 100) in Abhängigkeit der eintreffenden Strahlung der Strahlungsenergie (10) durch Aktoren (13) bewegbar ausgestaltet, wobei die Steuerungseinheit (21) die Aktoren (13) zum Erzeugen von definierten Öffnungen zur Belüftung des Schachtinnenraums (2) in Abhängigkeit der eintreffenden Strahlung und/oder der Temperatur und/oder der Luftfeuchte und/oder den Lichtverhältnissen im Schachtinnenraum (2) und/oder von der Intensität der Strahlungsenergie (10) und/oder der Witterungsverhältnisse und/oder der Windgeschwindigkeit und/oder Luftfeuchte und/oder der Oberflächenfeuchte außerhalb der Schachtgerüstverkleidung und/oder von der Temperatur an wenigstens einem Punkt der Schachtverkleidung ansteuert.

2. Aufzugsanlage nach Anspruch 1, **dadurch gekennzeichnet, dass** auf der Schachtverglasung (1, 11a, 11b) wenigstens ein feststehender Photovoltaik-Wandler (12, 16, 100) oder beweglicher Photovoltaik-Wandler (14, 16') angebracht ist.

3. Aufzugsanlage nach einem der vorherigen Ansprüche, **dadurch gekennzeichnet, dass** zwischen dem zumindest einen Photovoltaik-Wandler (12, 14, 16, 16', 100) und dem Schachtinnenraum (2) eine Beschattungseinrichtung (15) angeordnet ist.

4. Aufzugsanlage nach Anspruch 3, **dadurch gekennzeichnet, dass** die Beschattungseinrichtung (15) in der Schachtverglasung (1, 11b) eingearbeitet ist oder auf einer der Oberflächen der Schachtverglasung (1, 11a, 11b) aufbringbar oder anbringbar ist.

5. Aufzugsanlage nach einem der vorherigen Ansprüche, **dadurch gekennzeichnet, dass** die Rückleitung der elektrischen Energie über die Gesamtheit voneinander nicht elektrisch isolierter Führungsschienen geführt wird.

6. Aufzugsanlage nach einem der vorherigen Ansprüche, **dadurch gekennzeichnet, dass** der zumindest eine Photovoltaik-Wandler (12, 14, 16, 16', 100) bei bestehenden Schachtgerüsten nachträglich anbringbar oder integrierbar ist.

7. Aufzugsanlage nach einem der vorherigen Ansprüche, **dadurch gekennzeichnet, dass** der zumindest eine Photovoltaik-Wandler oder ein Teil der mehreren Photovoltaik-Wandler oder alle Photovoltaik-Wandler (12, 14, 16, 16', 100) senkrecht oder um bis zu 70 Grad oder um bis zu 45 Grad, bezüglich der Lotachse geneigt angebracht ist/sind.

8. Aufzugsanlage nach einem der vorherigen Ansprüche, **dadurch gekennzeichnet, dass** die Einspeiseeinheit (22) im Schachtkopf oder in der Schachtgrube oder in einem Maschinenraum oder in einem separaten Schaltschrank oder in einem Haustechnikraum untergebracht ist.

9. Aufzugsanlage nach einem der vorhergehenden Ansprüche, **dadurch gekennzeichnet, dass** eine Energiespeichereinheit (23) vorgesehen ist.

10. Aufzugsanlage nach einem der vorherigen Ansprüche, **dadurch gekennzeichnet, dass** die Einspeiseeinheit (22) die elektrische Energie entweder aus einem Stromnetz (20) oder von dem zumindest einen Photovoltaik-Wandler (12, 14, 16, 16', 100) oder aus der Energiespeichereinheit (23) bezieht.

11. Aufzugsanlage nach einem der vorherigen Ansprüche, **dadurch gekennzeichnet, dass** die Einspeiseeinheit (22) elektrische Energie von dem zumindest einen Photovoltaik-Wandler (12, 14, 16, 16', 100) entweder in ein Stromnetz (20) oder in die Energiespeichereinheit (23) einspeist.

## Claims

1. Elevator system comprising a shaft frame with a photovoltaic controller comprising a shaft glazing (1, 11a, 11b) for an elevator shaft (2) which can be attached to a building (3), at least one photovoltaic converter (12, 14, 16, 16' 100) which converts incoming radiation energy (10) into electrical power, the elevator system comprising aggregates (24), a control unit (21) and a feed unit (22) which provides the generated electrical power for further processing, wherein the control unit (21) supplying the aggregates (24) with control signals and electrical power provided by the feed unit (22), **characterized in that** a control unit (21) with sensors is provided which makes at least a part of the photovoltaic converters (12, 14, 16, 16' 100) movable by actuators (13) in dependence on the incoming radiation energy (10), wherein the control unit (21) controls the actuators (13) for producing defined openings for ventilating the shaft interior (2) as a function of the incoming radiation energy and/or the temperature and/or the air humidity and/or the light conditions in the shaft interior (2) and/or of the intensity of the radiation energy (10) and/or of the weather conditions and/or of the wind speed and/or air humidity and/or of the surface humidity outside the shaft framework cladding and/or of the temperature at at least one point of the shaft cladding.

2. Elevator system according to claim 1, **characterized in that** at least one fixed photovoltaic converter (12, 16, 100) or movable photovoltaic converter (14, 16') is mounted on the shaft glazing (1, 11a, 11b).

3. Elevator system according to one of the previous claims, **characterized in that** a shading device (15) is arranged between the at least one photovoltaic converter (12, 14, 16, 16', 100) and the shaft interior (2).

4. Elevator system according to claim 3, **characterized in that** the shading device (15) is incorporated in the shaft glazing (1, 11b) or is mountable or attachable on one of the surfaces of the shaft glazing (1, 11a, 11b).

5. Elevator system according to one of the previous claims, **characterized in that** the return line of the electrical power is routed via the entirety of guide rails which are not electrically insulated from one another.

6. Elevator system according to one of the previous claims, **characterized in that** the at least one photovoltaic converter (12, 14, 16, 16', 100) can be subsequently attachable or integrated in existing shaft frames.

7. Elevator system according to any one of the preceding claims, **characterized in that** the at least one photovoltaic converter or part of the plurality of photovoltaic converters or all of the photovoltaic converters (12, 14, 16, 16', 100) is/are mounted vertically or inclined by up to 70 degrees or by up to 45 degrees, with respect to the plumb axis.

8. Elevator system according to one of the previous claims, **characterized in that** the feed unit (22) is accommodated in the shaft head or in the shaft pit or in a machine room or in a separate switch cabinet or in a building services room.

9. Elevator system according to one of the preceding claims, **characterized in that** an energy storage unit (23) is provided.

10. Elevator system according to one of the previous claims, **characterized in that** the feed unit (22) obtains the electrical power either from a power grid (20) or from the at least one photovoltaic converter (12, 14, 16, 16', 100) or from the energy storage unit (23).

11. Elevator system according to one of the previous claims, **characterized in that** the feed unit (22) feeds electrical power from the at least one photovoltaic converter (12, 14, 16, 16', 100) either into a power grid (20) or into the energy storage unit (23).

## Revendications

1. Installation d'ascenseur compreanant une ossature formant cage avec une commande photovoltaïque, comprenant un vitrage de cage (1, 11a, 11b) pour une cage d'ascenseur qui peut être montée au niveau d'un bâtiment (3), au moins un convertisseur photovoltaïque (12, 14, 16, 16', 100) qui transforme l'énergie de rayonnement incident (10) en énergie électrique,
l'installation d'ascenseur comprenant des groupes (24), une unité de commande (21) et une unité d'alimentation (22) qui fournit l'énergie électrique générée pour un traitement ultérieur, l'unité de commande (21) alimentant les groupes (24) en signaux de commande et en énergie électrique fournie par l'unité d'alimentation (22), **caractérisée en ce que**
il est prévu une unité de commande (21) avec des capteurs, qui permet de déplacer au moins une partie des convertisseurs photovoltaïques (12, 14, 16, 16', 100) en fonction du rayonnement incident (10) par des actionneurs (13),
l'unité de commande (21) pilote les actionneurs (13) pour générer des ouvertures définies pour la ventilation de l'intérieur (2) de la cage en fonction du rayonnement incident (10) et/ou de la température et/ou de l'humidité de l'air et/ou des conditions d'éclairage dans l'intérieur de la cage (2) et/ou de l'intensité de l'énergie de rayonnement (10) et/ou des conditions météorologiques et/ou de la vitesse du vent et/ou de l'humidité de l'air et/ou de l'humidité de surface à l'extérieur de l'habillage de l'ossature formant cage et/ou de la température en au moins un point de l'habillage de la cage.

2. Installation d'ascenseur selon la revendication 1,
**caractérisée en ce qu'**au moins un convertisseur photovoltaïque fixe (12, 16, 100) ou un convertisseur photovoltaïque mobile (14, 16') est monté sur le vitrage de cage (1, 11a, 11b).

3. Installation d'ascenseur selon l'une des revendications précédentes,
**caractérisée en ce qu'**un dispositif d'ombrage (15) est disposé entre ledit au moins un convertisseur photovoltaïque (12, 14, 16, 16', 100) et l'intérieur (2) de la cage.

4. Installation d'ascenseur selon la revendication 3,
**caractérisée en ce que** le dispositif d'ombrage (15) est intégré dans le vitrage de cage (1, 11b) ou peut être appliqué ou monté sur l'une des surfaces du vitrage de cage (1, 11a, 11b).

5. Installation d'ascenseur selon l'une des revendications précédentes,
**caractérisée en ce que** le retour de l'énergie électrique est réalisé par l'ensemble des rails de guidage non isolés électriquement les uns des autres.

6. Installation d'ascenseur selon l'une des revendications précédentes,
**caractérisée en ce que** l'au moins un convertisseur photovoltaïque (12, 14, 16, 16', 100) peut être monté ou intégré ultérieurement à des ossatures formant cages existantes.

7. Installation d'ascenseur selon l'une des revendications précédentes,
**caractérisée en ce que** ledit au moins un convertisseur photovoltaïque ou une partie de la pluralité de convertisseurs photovoltaïques ou tous les convertisseurs photovoltaïques (12, 14, 16, 16', 100) est/sont monté(s) verticalement ou en étant incliné(s) jusqu'à 70 degrés, ou jusqu'à 45 degrés, par rapport à l'axe vertical.

8. Installation d'ascenseur selon l'une des revendications précédentes,
**caractérisée en ce que** l'unité d'alimentation (22) est logée en tête de cage ou dans la fosse de la cage ou dans une salle des machines ou dans une armoire de commande séparée ou dans un local technique.

9. Installation d'ascenseur selon l'une des revendications précédentes,
**caractérisée en ce qu'**il est prévu une unité de stockage d'énergie (23).

10. Installation d'ascenseur selon l'une des revendications précédentes,
**caractérisée en ce que** l'unité d'alimentation (22) tire l'énergie électrique soit d'un réseau électrique (20), soit dudit au moins un convertisseur photovoltaïque (12, 14, 16, 16', 100), soit de l'unité de stockage d'énergie (23).

11. Installation d'ascenseur selon l'une des revendications précédentes,
**caractérisée en ce que** l'unité d'alimentation (22) injecte l'énergie électrique, provenant dudit au moins un convertisseur photovoltaïque (12, 14, 16, 16', 100), soit dans un réseau électrique (20) soit dans l'unité de stockage d'énergie (23).
